# EUROPEAN PATENT SPECIFICATION

(11) **EP 3 216 775 B1**
(45) Date of publication and mention of the grant of the patent: **29.04.2020**
(21) Application number: 17160697.3
(22) Date of filing: 13.03.2017
(51) Int. Cl.: C04B 41/00

(54) **A METHOD FOR MANUFACTURING A LAMINATED TILE**
VERFAHREN ZUR HERSTELLUNG EINER LAMINIERTEN FLIESE
PROCÉDÉ DE FABRICATION D'UNE TUILE STRATIFIÉE

(30) Priority: 11.03.2016 EP 16160009
(43) Date of publication of application: 13.09.2017
(73) Proprietor: MBI Group B.V., 5466 AE Veghel (NL)
(72) Inventor: BETTONVIL, Marcelis Martinus Johannes, 5466 AE Veghel (NL); MOLLINK, Wilhelmus Antonius Gerardes, 5466 AE Veghel (NL)
(74) Representative: Plaggenborg, Menko Bernard

(56) References cited:
- EP-A1- 2 172 330
- WO-A1-96/31656
- GB-A- 1 124 642
- JP-A- H1 018 551
- JP-A- H1 037 441
- JP-A- H09 323 310
- US-A1- 2011 146 200

## Description

The present invention relates to a method for manufacturing a laminated tile comprising a mutually connected solid tile body and concrete body according to claim 1. The laminated tile obtained according to the present invention is mainly used in outdoor applications, such as for garden and terrace.

To a limited extent, the application of laminated tiles in outdoor applications is known in the art. Theoretically, laminated tiles as indicated above have excellent properties, because of a combination of highly attractive appearance due to a solid tile body at a visible side of the laminated tile and high strength due to the concrete body at the non-visible side. For example, laminated tiles may be comprised of a concrete body and a solid tile body chosen from ceramics, natural stone, metal such as zinc, aluminum, stainless steel and corten steel, plastics, rubber, wood, and glass, without limitation.

However, these known laminated tiles do not withstand temperature and humidity fluctuations. It has shown that laminated tiles, for example if manufactured from natural or ceramic material on a concrete basis, suffer from fracture and deterioration when used outdoors. On the other hand, it is hard to build a flat terrace with a sufficient stable base layer so as to prevent the solid tile bodies from breaking. As a consequence, for outdoor use these known laminated tiles are not available on the market in a large scale.

As a consequence, there is a need for an improved manufacturing method for laminated tiles, more in particular laminated tiles that are comprised of a ceramic upper layer and a concrete body.

The invention therefore aims at providing a manufacturing method for a laminated tile, also referred to as sandwich tile, comprised of a solid tile body and a concrete body. When in use, the concrete body is positioned on a base layer, usually sand, and thus is not visible whereas the solid tile body is exposed and thus is visible when in use.

It is clear to a man skilled in the art that a method for manufacturing a laminated tile is completely different from a tiling operation for, for example, creating a terrace. According to the present invention, the term "laminated tile" or "sandwich tile" relates to the product obtained with the method according to the present invention, whereas the term "solid tile body" relates to the "ceramic tile", "natural stone tile", "metal tile" or the like, that forms the visible part of the "laminated tile" according to the present invention. The concrete body is substantially as large as the solid tile body so as to be able to position the solid tile bodies of respective laminated tiles substantially adjacent. However, the concrete body parts may extend a little bit outside the circumference of the solid tile body so as to obtain a joint between the solid tile body parts of adjacent laminated tiles.

The invention also aims at providing a method for manufacturing an improved laminated tile, obtained from a solid tile body and a concrete body.

More in particular, the present invention aims at providing a method for manufacturing a laminated tile that has excellent adhesive strength between solid tile body and concrete body.

So as to obtain at least one of the goals mentioned above, the present invention provides a method for manufacturing a laminated tile comprising the features of claim 1. The laminated tile obtained according to this method has the advantage that excellent adhesion strength is obtained between the solid tile body and the concrete body, independent weather conditions like temperature and humidity.

Hereafter, reference will be mainly made to "ceramic tile" whereas any solid tile body is meant as well in those cases. The invention is therefore not limited to a laminated tile comprising a ceramic tile but to any laminated tile comprising a solid tile body at a visible side and a concrete body.

The application of a primer that uses a water polymerizable polymerization system, which is a polymerization system that comprises water for polymerization of the monomers, yields a good adhesion of the solid tile body and the concrete mixture irrespective of the weather conditions.

Furthermore, during polymerization the adhesive is not completely hardened and therefore will adapt to the shape and size of the concrete on the one hand and the shape and size of the solid tile body on the other hand. Such yields a bonding that virtually is stress free and that also remains stress free..

A very efficient polymerization system yields polyurethane adhesive as an adhesive for the concrete mixture and the solid tile body. Therefore, in particular, preference is given to a laminated tile wherein said adhesive comprises a polyurethane polymer. Hence, to that end the primer will preferably comprise di-isocyanate monomers.

In the present invention, the laminated tile may comprise a solid tile body chosen from ceramics, natural stone, metal such as zinc, aluminum, stainless steel and corten steel, plastics, rubber, wood, and glass. Especially when using a polyurethane primer system, i.e. a primer that yields polyurethane upon polymerization, excellent adhesion between said solid tile body and concrete is obtained.

Accordingly, the invention therefore relates to a method for manufacturing a laminated tile, said method comprising the steps of:
a) using a primer composition that comprises monomers that form part of a water polymerizable polymerization system;
b) applying said primer composition to at least one of a first surface of a solid tile body and a first surface of a concrete body,
c) contacting said first surfaces of said solid tile body and said concrete body;
d) polymerizing said primer composition for obtaining a laminated tile with an elastic bonding between the solid tile body and the concrete body. The application of a primer that uses a water polymerizable polymerization system, which is a polymerization system that comprises water for polymerization of the monomers, yields a good adhesion of the solid tile body and the concrete mixture irrespective of the weather conditions. An example of a very efficient polymerization system yields polyurethane adhesive as an adhesive for the concrete mixture and the solid tile body. Hence, to that end the primer will preferably comprise di-isocyanate monomers.

The use of a water polymerizable polymerization system has additional advantage, since water that is present in the concrete mixture that is added to the primer coated solid tile body provides in polymerization of said monomers. Furthermore, during polymerization the adhesive is not completely hardened and therefore will adapt to the shape and size of the concrete on the one hand and the shape and size of the solid tile body on the other hand. Such yields a bonding that virtually is stress free and that also remains stress free. In addition to this, a concrete with an open structure provides additional advantage in connection of the adhesive according to the present invention to the concrete body.

According to an alternative method, also embodied by the method according to the present invention and as described in claim 1, a solid concrete body, at least partially hardened (or set) so as to be able to be handled, is positioned on top of the solid tile body, for example a ceramic tile, such that the primer composition is positioned in between the solid tile body and the concrete body. The adhesive is subsequently polymerized so as to obtain an elastic bonding.

It is further preferred that the method comprises a step of positioning said solid tile body in a mold, exposing a first surface before step b), or between step b) and step c); and an additional step of removing said product from the mold after step d). Such substantially eases the manufacturing of a well-defined laminated tile since the size and shape of the concrete body may be made consistent with the solid tile body's shape and size.

According to the present invention, the primer comprises a polymerization system of at least one polymerizable di-isocyanate monomer for obtaining a polyurethane polymer.

More in particular, said primer preferably comprises diphenylmethane-4,4'-di-isocyanate as active ingredient, and optionally additives as known in the art of polymerization.

The amount of primer coated onto the surface of the solid tile body is preferably between 150 and 180 g/m2. Preferably, a waiting period of at least 2 minutes is adhered to before adding the concrete mixture to said coated surface. Such waiting period seems to aid in a god adhesion between the primer and the solid tile body.

So as to slow down or even delay the polymerization reaction, it is preferred that said primer comprises a water scavenger in an amount of maximally 5 wt.%, preferably maximally 1.5 wt.%, for example p-toluene sulphonyl isocyanate. Adding a water scavenger allows one to coat a surface of the solid tile body with said primer without said monomers starting to react. The scavenger will bind any water from the air. Only after adding the concrete mixture sufficient water will be added allowing the polymerization to start.

As known in the art, the concrete mixture may comprise cement as hydraulic binder and at least one of sand, granulate and blast furnace slag flour as an aggregate. As a preferred embodiment said concrete comprises a combination of at least two of said aggregates, more preferably three of these aggregates, and most preferably all of these aggregates.

In the method, said sand has an average particle dimension of maximally 4 mm, and said granulate has an average particle dimension of between 2 and 8 mm. Said cement has an average particle size as commonly used. The blast furnace slag flour may be used as a complete or partly substitute for said cement and may have the same dimension as cement. Use of blast furnace slag flour as a full or partial substitute for cement (preferably about 25 - 50%, more preferably about 33% slag flour) has as advantage that curing (or hardening) of the concrete mixture is substantially slower than when using cement only (for example Portland cement). Dimensions of the aggregates may be as is common in the art. This counts both for a case where only one or a limited number of aggregates is used and in the case where all four aggregates are used.

It has unexpectedly shown that the laminated tile obtained with the method according to the present invention, after the concrete and the adhesive have completely set, is substantially completely resistant to moisture and temperature fluctuations. It is even more surprising that according to the present inventive method the adhesive strength even may be further improved by subjecting the laminated tile to moisture. The adhesive bonding between the concrete and the solid tile body has a higher strength than the concrete itself.

So as to ensure that any concrete mixture does not enter any gaps between the solid tile body and the mold's side walls, which might pollute the solid tile body's top surface, it is preferred that the method comprises the step of applying a non-liquid concrete mixture. The term "non-liquid" means that the concrete mixture has such a consistency that within the time required for setting or hardening out, it does not substantially change its shape without active outside interference. Such behavior is also known by the term "non-flowing characteristics". A man skilled in the art of concrete technology is easily able to determine what concrete mixture fulfills such requirement. Surprisingly, it has shown that applying such non-liquid mixture provides a sufficient bonding between the concrete body and the solid tile body. It was expected that an optimum bonding could only be obtained by applying a liquid mixture so as to obtain a maximum wetting of the solid tile body's surface. It was even more surprising that the non-liquid mixture yields a remarkable, even sensational, ability to withstand temperature fluctuations and winter conditions. Applying a concrete mixture with an open character improves these characteristics even further.

The solid tile body should closely fit inside said mold. As a matter of fact, the side walls of said mold may be provided with a compressible material so as to ensure that said solid tile body is closely sealed at all edges, but a close fitting of side walls of the mold may provide good results as well. In such case, the mold may be comprised of a rigid, dimensionally stable material. Since the concrete material that is used for manufacturing the concrete body has a course structure, it will not enter any space between the solid tile's body and the mold sidewalls if such space is substantially smaller than 0.5 mm, preferably smaller than 0.4 mm. A non-flowing concrete material as used in the present invention has as a characteristic that it does not penetrate spaces smaller than 0.5 mm. Also, since the concrete material according to the present invention has an open structure, not all interstices between the course granulate material in the concrete material is filled with finely divided material, like cement and slag flour (for example blast furnace slag flour which is a substitute for cement providing a slow hardening or curing) or other kinds of cement or cement substitute.

Preferably, the laminated tile's side walls are at least at part of their circumference somewhat wider than the dimension of the solid tile body. This ensures that the concrete body of the laminated tile protrudes at least partly beyond the side edges of the solid tile body. Preferably, the concrete body protrudes at least partly beyond all edges of said solid tile body. Such yields a laminated tile that can be easily laid side by side without damaging the ceramic layer. The concrete bodies of adjacent tiles contact each other at said protruding portion, whereas the solid tile bodies are spaced apart. This also provides room for a pointing mortar or the like between adjacent tiles.

Fig. 1 shows a simplified perspective view of a tile obtained with the method according to the invention,

Fig. 2 shows a simplified mold for manufacturing a tile according to the invention.

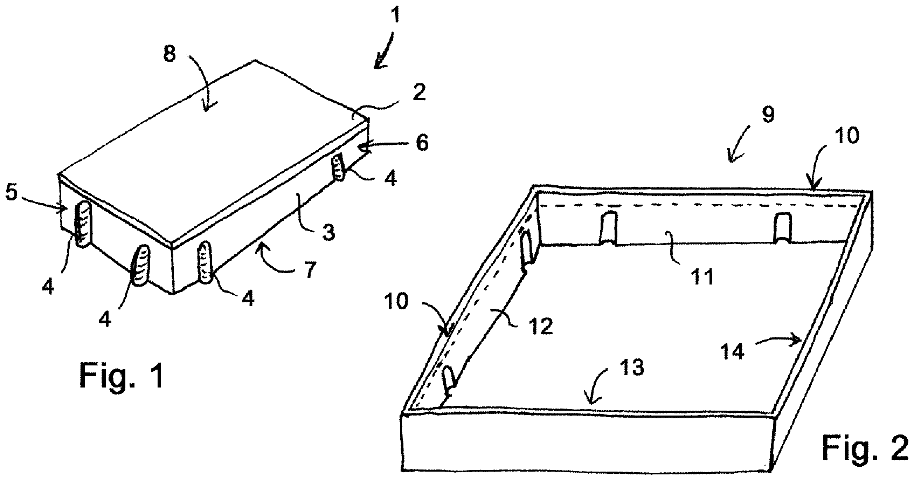

Fig. 1 shows a laminated tile 1 obtained with the method according to the invention, comprised of a solid tile body 2, in this case an exemplary ceramic tile 2, and a concrete body 3. The concrete body 3 comprises spacers 4. The spacers 4 consist in the embodiment shown in the figure, of protrusions at side walls 5, 6 of said laminated tile. In the embodiment of Fig. 1, the spacers 4 end at some distance from the ceramic tile 2, which means that the spacers do not extend until the ceramic tile 2. However, according to an alternative embodiment, the laminated tile 1 according to the invention may be embodied such that the spacers 4 do extend until the ceramic tile 2. Furthermore, the spacers 4 extend to the bottom 7 of the tile 1, whereas the spacers may extend over part of the side walls 5, 6 only, i.e. not extending to said bottom 7. When in use, the ceramic tile 2 is positioned at the laminated tile's top side 8.

A mold 9 for manufacturing a tile 1 according to the invention is shown in Fig. 2. As a matter of fact, said mold 9 is shown in an upside down fashion. When manufacturing a laminated tile 1, said mold 9 is positioned with its bottom side 10 on a flat, optionally compressible, surface after which a ceramic tile 2 is positioned within the mold 9, its side walls preferably close to the side edges 11, 12, 13, 14 of said mold 9. Then, a concrete mixture is poured into said mold 9 and allowed to set sufficiently for removing said tile 1 from the mold 9 without damaging same. Then, the tile 1 is removed from the mold 9 and allowed to fully set.

The invention is not limited to the embodiment described above. The invention is limited only by the appending claims.

The invention also comprises every combination of features that are mentioned here independently from each other.

## Claims

1. A method for manufacturing a laminated tile, **characterized by** said method comprising the steps of:
a) using a primer composition that comprises monomers that form part of a water polymerizable polymerization system;
b) applying said primer composition to at least one of a first surface of a solid tile body and a first surface of a concrete body,
c) contacting said first surfaces of said solid tile body and said concrete body;
d) polymerizing said primer composition for obtaining a laminated tile with an elastic bonding between the solid tile body and the concrete body.

2. The method according to claim 1, comprising a step of positioning said solid tile body in a mold, exposing a first surface before step b) or between step b) and step c); and an additional step of removing said product from the mold after step d).

3. A method according to claim 1, wherein said primer comprises a polymerization system of at least one polymerizable di-isocyanate monomer for obtaining a polyurethane polymer, wherein said primer preferably comprises diphenylmethane-4,4'-di-isocyanate as active ingredient, and optionally additives.

4. A method according to claim 1, wherein said primer comprises a water scavenger in an amount of maximally 5 wt.%, preferably maximally 1.5 wt.%, for example p-toluene sulphonyl isocyanate.

## Patentansprüche

1. Verfahren zur Herstellung einer laminierten Fliese, **dadurch gekennzeichnet, dass** das Verfahren die Schritte umfasst:
a) Verwenden einer Primer-Zusammensetzung, die Monomere enthält, die Teil eines Wasser-polymerisierbaren Polymerisationssystems bilden;
b) Auftragen der Primer- Zusammensetzung auf mindestens eine erste Oberfläche eines festen Fliesenkörpers und eine erste Oberfläche eines Beton-Körpers,
c) Inkontaktbringen der ersten Oberfläche des festen Fliesenkörpers und des Beton-Körpers;
d) Polymerisieren der Primer-Zusammensetzung zum Erhalt einer laminierten Fliese mit einer elastischen Verbindung zwischen dem festen Fliesenkörper und dem Beton-Körper.

2. Verfahren nach Anspruch 1, welches einen Schritt der Positionierung des festen Fliesenkörpers in einer Gußform, Aussetzen einer ersten Oberfläche vor Schritt b) oder zwischen Schritt b) und Schritt c); und einen weiteren Schritt der Entfernung des Produkts aus der Gußform nach Schritt d) umfasst.

3. Verfahren nach Anspruch 1, wobei der Primer ein Polymerisationsystem von mindestens einem polymerisierbaren Diisocyanatmonomer umfasst, um ein Polyurethanpolymer zu erhalten, wobei der Primer vorzugsweise Diphenylmethan-4,4'-diisocyanat als aktiven Inhaltsstoff umfasst, und wahlweise Additive.

4. Verfahren nach Anspruch 1, wobei der Primer einen Wasser-Fänger in einer Menge von maximal 5 Gew.-% umfasst, vorzugsweise maximal 1,5 Gew.-%, beispielsweise p-Toluolsulphonylisocyanat.

## Revendications

1. Procédé de fabrication d'un carreau stratifié, **caractérisé par le fait que** ledit procédé comprend les étapes consistant à:
a) utiliser une composition de primaire qui comprend des monomères qui font partie d'un système de polymérisation polymérisable à l'eau;
b) appliquer ladite composition de primaire sur au moins l'une d'une première surface d'un corps de carreau solide et d'une première surface d'un corps en béton;
c) mettre en contact lesdites premières surfaces dudit corps de carreau solide et dudit corps en béton;
d) polymériser ladite composition de primaire pour obtenir un carreau stratifié avec une liaison élastique entre le corps de carreau solide et le corps en béton.

2. Procédé selon la revendication 1, comprenant une étape consistant à positionner ledit corps de carreau solide dans un moule, exposant une première surface avant l'étape b) ou entre l'étape b) et l'étape c); et une étape supplémentaire consistant à retirer ledit produit du moule après l'étape d).

3. Procédé selon la revendication 1, dans lequel ledit primaire comprend un système de polymérisation d'au moins un monomère diisocyanate polymérisable pour obtenir un polymère polyuréthane, ledit primaire comprenant de préférence le diphénylméthane-4,4'-di-isocyanate en tant qu'ingrédient actif, et facultativement des additifs.

4. Procédé selon la revendication 1, dans lequel ledit primaire comprend un agent piégeur d'eau dans une quantité d'au maximum 5 % en poids, de préférence d'au maximum 1,5 % en poids, par exemple l'isocyanate de p-toluène sulfonyle.
